# EUROPEAN PATENT APPLICATION

(11) **EP 3 522 136 A1**
(43) Date of publication of application: **07.08.2019**
(21) Application number: 18154720.9
(22) Date of filing: 01.02.2018
(51) Int. Cl.: G09B 23/34

(54) **ARRANGEMENT FOR SIMULATING AND/OR TRAINING AN INTRACRANIAL MEDICAL PROCEDURE AND METHOD FOR PRODUCING THE SAME**

(71) Applicant: DMD GmbH Digital Medical Design, 44227 Dortmund (DE)
(72) Inventor: CAROLUS, Anne Elisabeth, 44227 Dortmund (DE); BRENKE, Christopher, 44227 Dortmund (DE)
(74) Representative: Schmidt, Christian

(57) **Abstract**

An arrangement for simulating and/or for training of an intracranial medical procedure, in particular a surgical procedure, e.g. a neurosurgical procedure, is provided, the arrangement comprising: a head member (10) that is provided to act as a substitute for the cranium, the head member having a wall (28) defining an inner volume (24) of the head member, and a target carrier (18), one solid target body or a plurality of solid target bodies (B1...B5) being positioned on the target carrier, wherein the solid target body is arranged relative to the head member such that the respective solid target body is arranged within a predetermined target region in the inner volume of the head member.

## Description

The present disclosure relates to an arrangement, e.g. one for simulating and/or for training an intracranial medical procedure, in particular a surgical procedure, e.g. a neurosurgical procedure, a method for producing the arrangement as well as other methods and systems involving the arrangement, such as a method and/or a system for checking the accuracy of a navigation system, particularly a neurosurgical navigation system.

Learning and enhancing manual surgical skills in the field of neurosurgery requires an intensive practical training which can be performed by using virtual reality (VR)-based or physical model (PM)-based simulators, in order to acquire the relevant skills, maintain the relevant skills or refresh the relevant skills. However, both simulator types are usually limited to one specific intracranial procedure, e.g. the application of an external ventricular drainage (EVD). This especially holds for PM-based simulators. Examples for PM-based simulators are discussed in "Ryan JR, Chen T, Nakaji P, Frakes DH, Gonzales LF (2015) Ventriculostomy Simulation Using Patient Specific Ventricular Anatomy, 3D Printing, and Hydrogel Casting. World Neurosurg 84(5): 1333-9" and "Tai BL, Rooney D, Stephenson F, Liao PS, Sagher O, Shih AJ, Savastano LE (2015) Development of a 3D-printed external ventricular drain placement simulator: technical note. J Neurosurg 123(4): 1070-6".

Furthermore, currently neither PM-based nor VR-based simulators do usually provide any accuracy verification of a navigation system which is used to guide a tool or probe to a predetermined intracranial position or region. Of course, as the accuracy of the navigation system is crucial for such procedures, it is desirable to provide a simulator which enables that the accuracy of the navigation system which is used for a surgical or neurosurgical procedure is evaluated in an ex-vivo setting.

It is an object of the present disclosure to provide an arrangement which enables improvements associated with intracranial medical procedures, such as navigation systems or algorithms and/or training systems used during intracranial procedures or for training such procedures. This object is achieved by the subject-matter of the independent claims. However, other subject-matter may be disclosed herein, which facilitates the procedures and is not necessarily claimed. Advantageous developments and refinements are subject to the dependent claims.

An aspect of the present disclosure relates to an arrangement for simulating and/or for training of an intracranial medical procedure, in particular a surgical procedure, such as a neurosurgical procedure. Another aspect of the disclosure relates to a system for simulating and/or training a medical procedure. The system expediently comprises the arrangement. Still another aspect relates to a method of simulating and/or training a medical procedure. Also a further aspect relates to a method of checking the accuracy of and/or of calibrating a navigation system. Yet another aspect relates to a method of manufacturing an arrangement as recited above.

In the following, features disclosed with respect to different aspects or embodiments should also be regarded as being disclosed in relation to all other aspects or embodiments. Features of different embodiments can be combined with one another, even if not explicitly disclosed in combination with each other, e.g. even when described in conjunction with the drawings. For example, features disclosed in embodiments related to any of the methods or the system do also apply for the arrangement and vice versa.

In an embodiment, the arrangement comprises a head member. The head member may comprise or define an inner or interior volume. The head member may have a wall, e.g. an inner wall, which defines or limits the inner or interior volume of the head member. The head member may be provided to act as a substitute for or to mimic the skull or cranium, for example of a patient. The head member may be a skull dummy or a skull simulator. Accordingly, the head member may be used as a substitute for the head of a patient on whom the medical procedure to be simulated or trained is regularly conducted, e.g. a mammal, such as a human. The head member may comprise at least a section which is anatomically accurately shaped according to the head or skull of a patient, where the section may include skin mimicking tissue or not.

In an embodiment, the arrangement comprises a target carrier. At least one solid target body, preferably a plurality of solid target bodies, may be positioned on the target carrier. The target carrier may support the respective solid target body. The respective solid target body may be arranged relative to the head member such that the solid target body is arranged within a predetermined target region in the inner volume of the head member. The inner volume of the head member may be or may comprise a volume or region which is characteristic for the brain of a patient or one, more or all sections or regions thereof. The inner volume may be dimensioned to be at least as great as the volume characteristic for regular brain or a section thereof, such as a supratentorial section. The position of the respective solid target body relative to the target carrier and/or within the inner volume may be chosen so as to be an intracerebral position, that is to say a position within the head member which is characteristic for the interior of the brain. Thus, the respective predetermined target region may be an intracerebral region, for example.

In an embodiment, the respective target body is fixed relative to, preferably fixed to, the target carrier. In this way, a precise position of the target body relative to the target carrier is provided. The target carrier may be the entity which is produced to simulate or train a particular medical procedure. For training or simulating different procedures, different target carriers may be produced.

In an embodiment, the respective target body is, preferably permanently, secured to or at least secured relative to the target carrier. The target body may be secured directly to the target carrier or indirectly, e.g. secured to a further element where the further element is secured, e.g. directly or indirectly, to or relative to the target carrier. The target carrier is, preferably releasably, secured or fixed relative to, such as directly to, the head member. It is preferred, that for securing the target carrier relative to the head member, one or more non-metal fixing members are used, e.g. plastic fixing members, such as one or more plastic screws. Non-metal fixing members do usually provide less artefacts or are not easily perceivable in images produced by medical imaging systems such as a computer tomography system. The target carrier may be axially and rotationally secured to the head member. In this way, via the target carrier, a defined position of the respective target body within the inner volume may be provided. In particular, the target carrier may be mounted relative to the head member in a defined position. Thus, even when the target carrier is substituted with a new target carrier with a different arrangement or pattern of target bodies, the new carrier may still be secured at the same location or position to the same head member. Fixing features of different target carriers to fix the target carrier to the head member may be provided at corresponding locations on both target carriers.

As the target carrier is releasably secured to the head member, a replacement of a specific target carrier with one predetermined relative arrangement of target bodies with another target carrier which has a different arrangement of solid target bodies is facilitated. The same head member may be used in conjunction with different target carriers. Accordingly, it is comparatively easy to exchange the target carrier with another target carrier which is adjusted for different target regions. Different patterns of intracranial target regions may be realized by differently configured target carriers with the appropriately arranged target bodies. Thus, the arrangement can be adjusted to different medical procedures easily, such as for an EVD or another supratentorial procedure. Supratentorial procedures may be conducted for addressing haemorrhages or tumors, for example.

In an embodiment, the respective solid target body is arranged to be contacted, preferably mechanically, by a probe or tool. The probe or tool can be guided into the interior volume or inner volume from the exterior of the head member, e.g. through the region of the wall. The probe or tool, e.g. a mandrin, may be electrically conductive. Thus, by way of the mechanical contact, it can be checked whether the probe is indeed arranged in that predetermined target region it was supposed to be guided into.

In an embodiment, the respective solid target body is arranged to define the predetermined target region, e.g. a center thereof. Whether the probe is arranged within a particular predetermined target region may be determined by way of an electrical position signal which is indicative for the position of the probe relative to that target body which defines the particular predetermined target region. The position may be the distance of the probe from the target body. Different electrical position signals may be indicative for the position of the probe relative to different solid target bodies. If the electrical position signal relative to a particular solid target body is within a predetermined range or greater than a predetermined threshold the probe is arranged in the predetermined target region defined by the particular solid target body. The position signal(s) may be monitored and, if the probe is arranged in one predetermined target region, an according control signal may be generated. The control signal may be a feedback control signal which causes generation of a feedback.

As solid target bodies may be employed, the present arrangement has a variety of advantages, especially over simulation systems which employ non-solid targets such as fluid filled target regions. For example, for the user of the arrangement, a mechanical contact with the target body is easily perceivable by the increased resistance. Secondly, when mechanically contacting the solid target body, the mechanical contact, which may be established by the probe, can be used to generate an electrical contact signal which, of course, is usable for several purposes such as for controlling or operating a feedback system. The feedback system may be configured to provide an optical feedback indicating that contact has been made with a particular solid target body. In case there is a plurality of target bodies, the feedback system preferably generates different feedbacks, where the respective feedback may provide, preferably unambiguous, information about the particular one of the target bodies which has been contacted. If the probe or tool is electrically conductive, the contact signal may be guided through the probe or tool.

Furthermore, solid target bodies, in particular metal target bodies and/or electrically conductive target bodies, can be easily imaged in a medical imaging system such as a computer tomography system and provide distinct indication in the image data about the positions where the solid target bodies are located. Accordingly, image data derived from imaging the head member of the arrangement can be used to guide the movement of the probe or tool from the exterior of the head member to the position where the target body is located by means of a navigation system which may comprise an according algorithm.

Thus, the proposed arrangement can be used to train a medical procedure and also to simulate the medical procedure in order to check the accuracy of a navigation system, e.g. a neuronavigation system, such as with respect to hardware and/or software, like camera arrangements and/or algorithms which are employed, easily.

In an embodiment, the head member comprises a first head part and a second head part. The first head part may be, preferably releasably, secured to the second head part. The target carrier may be secured to one of the first head part and the second head part, e.g. the second head part. The inner volume may be defined, preferably predominantly or entirely, by that head part to which the target carrier is not secured.

For securing the first head part and the second head part to one another, one or a plurality of fixing members may be used. The respective fixing member may be a non-metal and/or plastic fixing member, e.g. a plastic screw. An outer contour of the target carrier, particularly of a surface which delimits the target carrier in the lateral direction, may conform to an inner contour of the head member, e.g. an inner contour of that head part to which the target carrier is secured. Thus, the target carrier may be adjusted to the inner contour of the head member in that region where it is located. The respective head part may define a hollow.

In an embodiment, an outer contour of the head member is formed to resemble at least a section of a skull, e.g. the skull of a patient. For example, the outer contour of the head member is formed to resemble or have regions formed to resemble the skull cap and/or the skull base. The outer contour of the head member may define the outer contour of the arrangement at least in sections or entirely. The outer contour of the first head part may resemble an exterior contour of a skull cap. The second head part may resemble the exterior contour of a skull base.

In an embodiment, the arrangement comprises a plurality of separate or different solid target bodies. Two solid target bodies may be arranged in different predetermined target regions of the inner volume. Accordingly, the arrangement can be used to simulate or train a procedure which usually requires that a plurality of different regions within the cranium are made subject to the procedure, such as by introducing a probe or mandrin into the target region or utilize one target carrier to simulate or train guidance to different target regions.

In an embodiment, two solid target bodies which are arranged in different predetermined target regions do have different dimensions, e.g. different diameters. By means of the different dimensions of the target bodies in different predetermined regions, account can be taken for differently sized regions of interest within the cranium or different accuracy requirements in different regions. For example, it may be the case that one target region which has to be reached with the probe is smaller than another region, such that it is expedient to provide the region with the larger dimension with a target body of a larger dimension and the region with smaller dimension with a target body of smaller dimension.

In an embodiment, two solid target bodies of different dimensions are arranged in one predetermined target region. Accordingly, as one target region is provided with two different target bodies, which have different dimensions, mechanically contacting these bodies requires different degrees of accuracy. The smaller the dimension, the higher the accuracy. Thus, the user can train higher accuracies and/or the accuracy of the navigation system may be tested with differently sized target bodies in the same region but with different requirements regarding the accuracy. Still further, it may be tested or trained, whether the probe can be guided in the inner volume to avoid one of the solid target bodies in the target region while contacting another one in the same target region. Of course the target body with the higher dimension is targeted with a probe or tool for a lower accuracy procedure and the target body of smaller dimensions is targeted for a higher accuracy procedure.

In an embodiment, two solid target bodies in different target regions are separated by at least one of the following distances: 10 mm, 12 mm, 15 mm, 20 mm.

In an embodiment, two solid target bodies in a common target region are separated by not more than or less than one of the following distances: 10 mm, 9 mm, 8 mm, 7 mm, 6 mm, 5 mm, 4 mm, 3 mm, 2 mm, 1mm.

In an embodiment, the ratio between the area content of the outer surface of the target body with the greater dimension to the area content of the outer surface of the target body with the smaller dimension but in the same target region is greater than or equal to one of the following values: 2, 4, 8, 10, 15, 20, 25. Alternatively or additionally this ratio may be less than or equal to one of the following values: 40, 35, 30, 25. A ratio of 4 corresponds to two spherical bodies where the diameter or radius of the smaller one is half of the diameter or radius of the greater one.

In an embodiment, the respective solid target body is electrically conductive. For example, the respective solid target body may contain or be made of metal and/or may be a steel body. The respective solid target body may be made of or contain surgical steel. The electrical contact signal, such as an electrical current, may be conducted through the respective solid target body. The electrical signal may indicate that this particular solid target body has been mechanically contacted by the probe. Consequently, if the contact signal is generated, it is known, which solid target body has been contacted and/or it can be checked whether the correct or intended target body has been reached with the probe or tool.

In an embodiment, the solid target bodies are electrically separated from one another. Thus, electrical contact signals may be guided in separate conductors for each solid target body.

In an embodiment, the arrangement comprises a brain member. The brain member may be provided to simulate, imitate and/or mimic cerebral tissue. The brain member may be a brain simulator or brain dummy. The brain member may be arranged in the head member, e.g. in the first head part. The brain member may be arranged between the wall and a plurality of, preferably each of, the solid target bodies which the arrangement comprises. The respective solid target body may be embedded in the brain member. That is to say, the brain member may conform to a surface the contour of which is defined by the solid target body. For example, the brain member may directly contact the solid target body or an interlayer which is arranged between the brain member and the solid target body, the interlayer preferably conforming to the solid target body. The brain member may have a gelatinous consistency. The brain member may be made of or of a gellan gum. A surface or section of the brain member which faces the inner wall of the head member or the first head part may have a shape or structure, e.g. a structure in relief, which is complementary to the shape or structure of the wall of the head member which faces the brain member, e.g. of the first head part. The first head part may act as a form or mold for the brain member which defines the surface of the brain member during the manufacturing of the arrangement. In particular, the material for the brain member may be filled in liquid form into the first head part. Thereafter, the first head part may be secured to the second head part, where the target carrier has been mounted already.

In an embodiment, the material of the brain member or the brain member itself is electrically conductive. The solid target bodies, which may be electrically conductive as well, may be insulated electrically from the material of the brain member. In this way, a short circuit between the target bodies can be avoided. A short circuit would be detrimental to the detection of the mechanical contact to a particular solid target body. The solid target bodies may be electrically insulated from the brain member by an electrically insulating layer. The electrically insulating layer may conform to the outer surface of the respective target body. One electrically insulating layer may be arranged around each solid target body. However, the composite structures, where each structure comprises one insulating layer and the solid target body covered with that layer may still be separate from one another. However, the insulating layers on target bodies, especially in the same target region, may touch one another. Instead of insulating the solid target bodies via the insulating layer, the respective solid target body may be electrically conductively connected to the brain member. If the position of the probe relative to the solid target body(bodies) is determined via an electrical position signal, a current flowing between the respective solid target body and the probe through the brain member may be used as electrical position signal. The current may be distance dependent. Thus, employing an electrical conductive connection via the brain member is a particularly cost effective way for the electrical position signal. Of course, other ways of providing the electrical position signal indicative for the distance of the probe to the respective solid target body may be possible, such as via distance measurements, e.g. by lasers or ultrasonic devices. These methods may or may not require a (conductive) brain member.

In an embodiment, between the brain member and the respective solid target body, an interlayer is arranged. The interlayer may be of a material different from the material of the brain member and from the material of the solid target body. The interlayer may be the electrically insulating layer or an additional layer. It may be arranged between the electrically insulating layer and the brain member or between the target body and the electrically insulating layer, in case an insulating layer is provided. By means of the interlayer, a tactile feedback can be tailored when the tool or probe travels through the material of the brain member towards the solid target body. Once it reaches the interlayer, a difference in tactile feel may be recognizable by the user. Thus, as different regions of the brain may provide different tactile feedbacks, the feedback can be tailored to the specific region of the brain which is targeted. The interlayer may be a solid layer or a liquid layer.

In an embodiment, the electrically insulating layer and/or the interlayer, may be penetratable by the probe or tool. During penetration with the probe, the layer may be plastically or elastically deformed. If the layer is plastically deformed, an electrically conductive channel may be formed between the brain member and the solid target body through the electrically insulating layer. Accordingly, if this results in an electrical connection between two different solid target bodies through two different channels provided in two different layers, the arrangement might have to be substituted with a new one or the brain member and/or the interlayer may have to be replaced or reshaped. If the deformation is elastical, the opening in the layer is closed, once the probe is removed.

In an embodiment, the brain member or the material thereof comprises an antifungal agent. This may increase the timespan for which the arrangement can be used without the formation of fungi. Especially gellan gum is prone to the development of fungi, such that this embodiment is particularly suitable for brain members based on gellan gum. The antifungal agent may be provided by means of an antifungal ointment added to the material for the brain member when forming the brain member.

In an embodiment, the target carrier has a main surface. The main surface may be plane. The main surface may be that surface of the target carrier which faces towards the wall and/or the inner volume. The inner volume or the section thereof where the brain member is arranged may be limited by the target carrier. The main surface of the target carrier may be mechanically connected to or contacted by the brain member. At least one solid target body or a plurality of solid target bodies may be elevated with respect to the main surface. Specifically, there may be a distance between that surface or that end of the elevated solid target body which faces away from the inner wall and the main surface. Alternatively or additionally, at least one of the solid target bodies or a plurality of the solid target bodies may be arranged partly, i.e. at least partly or only partly, in a recess defined in the target carrier and/or in the main surface. Expediently, a solid target body which is arranged in a recess still protrudes from the main surface. This facilitates mechanical contacting of the solid target body by means of a probe or tool without having to impact the target carrier from a variety of angles. The height of an elevated solid target body relative to the main surface and/or the distance to the main surface may be greater than or equal to one of the following values: 2 mm, 5 mm, 6 mm, 10 mm, 15 mm, 20 mm, 25 mm, 30 mm, 35 mm.

In an embodiment, a protrusion extends from the main surface to the respective elevated solid target body. The protrusion may be integrally formed with the target carrier. The protrusion may be hollow. The respective elevated solid target body may bear on the protrusion. An electrical conductor, which is conductively connected to the solid target body, expediently the elevated solid target body to which the protrusion extends, may extend within the protrusion. As seen from the solid target body, the electrical conductor may extend away from the solid target body. Accordingly, an electrical contact signal may be guided by the electrical conductor away from the solid target body once the contact has been made. A free end of the hollow of the protrusion may be closed with the solid target body. The protrusion may be provided circumferentially around the electrical conductor, e.g. to insulate the conductor electrically from the brain member. The brain member may conform to the lateral or side surface of the protrusion. The protrusion may be embedded in the brain member.

In an embodiment, a mounting position of the respective solid target body on the target carrier is arranged in the recess and/or a free end of the protrusion. This facilitates electrical contact connection of the respective target body, particularly without electrically contacting the brain member.

In an embodiment, the target carrier and/or the head member is electrically insulating, e.g. of plastic.

In an embodiment, the medical procedure is an intracerebral and/or neurosurgical procedure. The medical procedure may be EVD.

In an embodiment, the target regions, where at least one solid target body is arranged, are chosen to be located in regions of the inner volume which are characteristic for any one, any plurality of or all of the following intracranial regions: different regions of the ventricular system such as the anterior horn of the right lateral ventricle, the third ventricle, e.g. near the foramen of monro, and/or the anterior horn of the left lateral ventricle, and/or different regions of the cerebral or brain tissue, such as the left or right occipital lobe, the left or right frontal lobe, e.g. near the medial line, the left or right temporal lobe, and/or the left or right gyrus angularis. The regions of the brain tissue may be supratentorial or infratentorial regions.

In an embodiment, the electrical conductor which is arranged within the protrusion is rigid and/or stiff. Thus, the conductor may stabilize the protrusion against deformation, e.g. in the radial direction. The exterior diameter of the conductor may be adjusted to the interior diameter of the protrusion. Stabilization may be facilitated in this way.

In an embodiment, a conduction path or channel may be defined in the target carrier. The conduction path or channel may extend along the main surface. The conduction path or channel may be provided to guide a conductor away or plurality of conductors away from the target carrier, for example to a side of the target carrier facing away from the inner volume. Conductors originating from or being conductively connected to different solid target bodies may be guided in a common conduction channel or path. The channel may be formed by a void.

In an embodiment, the respective solid target body has a curved surface. The solid target bodies may be spheres or balls, for example.

In an embodiment, the respective solid target body may be made of or comprise titanium or surgical steel. Surgical steel is a material common in surgical procedures. Also surgical steel balls are is readily available, e.g. from piercing studios. As opposed to surgical steel, titanium may cause less artefacts in medical imaging procedures such as computer tomography. However, as opposed to surgical steel, titanium may have a lower electrical conductivity. So, both materials have their advantages.

In an embodiment, the respective solid target body may have a diameter, e.g. a maximum or minimum diameter if the body has varying diameters, of greater than or equal to one of the followings values: 1 mm, 2 mm, 3 mm, 4 mm, 5 mm, 6 mm, 7 mm, 8 mm, 9 mm, 10 mm. Alternatively or additionally, the respective solid target body may have a diameter, e.g. a maximum or minimum diameter if the body has varying diameters, of less than or equal to one of the followings values: 20 mm, 15 mm, 10 mm, 9 mm, 8 mm , 7 mm, 6 mm, 5 mm, 4 mm, 3 mm.

In an embodiment, the head member comprises one or more openings. The openings may be defined in the first head part. The respective opening may be closed with a replaceable piece or closure part. The replaceable piece or closure part may be a cranial bone imitating or mimicking piece, e.g. of plastic. The replaceable piece or closure part may be from a different material than the adjacent section of the head member, where the material may, e.g. with respect to hardness etc., be more closely matched to typical cranial bone. A penetrating procedure such as a drilling procedure during training or simulation of the medical procedure may be conducted through the replaceable piece and the replaceable piece may be replaced for a subsequent procedure without having to exchange further elements of the arrangement such as the head member or a part thereof and/or the brain member.

In an embodiment, an arbitrary one of, an arbitrarily selected plurality of, or all of the following elements are 3D-printed elements or comprise 3D-printed elements:
- head member, e.g. first and/or second head part,
- target carrier,
- closure part or replaceable piece.

In an embodiment, the system for simulating or training the medical procedure comprises, in addition to the arrangement, an arbitrary one of, an arbitrarily selected plurality of or all of the following:
- A probe provided to contact the respective solid target body and/or to be guided into the respective predetermined target region. The probe is expediently electrically conductive. Accordingly, when the probe contacts the solid target body, an electrical circuit may be closed by means of the probe between the probe and the contacted solid target body. A current flowing through the closed circuit may indicate that mechanical contact has been made. As opposed to using the mechanical contact of a particular solid target body, the system may be configured to detect, based on an electrical position signal, whether the probe is arranged in one of the predetermined target regions. No mechanical contact with the target body may then be required. This configuration may be provided in addition to the contact detection or as an alternative thereto. The electrical position signal may be indicative for the position of the probe, e.g. of the end or tip thereof, relative to a particular solid target body or each solid target body. The electrical position signal may be an electric current flowing between the probe and the respective solid target body, e.g. through the portion of the electrically conductive brain member arranged between the tip of the probe and the respective solid target body. Particularly, the system may be configured to use a plurality of electrical position signals, e.g. one signal for each solid target body. If an electrical position signal(s) is(are) used, it is expedient that the solid target bodies are conductively connected to the brain member. The current which flows between the probe and the respective solid target body may depend on the distance between the tip or end of the probe and the respective solid target body and vary significantly with distance. Thus, the current qualifies as electrical position signal. The less the distance between probe and one particular solid target body, the higher the current usually is. Thus, if the electrical position signal exceeds a certain or predetermined threshold value, it is ensured that the probe is arranged close to one solid target body or within the predetermined region around the body which defines that region. There is no need that the body is contacted mechanically. The threshold value may be varied or set to define the size of the predetermined region. In the system the threshold values for different target bodies may be fixed or variable.
- An electrical circuit, e.g. a contact detection circuit and/or a position detection circuit. The contact detection circuit is preferably configured to generate or guide an electrical contact signal, such as the current, when mechanical contact is made between the probe and the respective solid target body. The position detection circuit, may be configured to compare the electrical position signal which is indicative for the position of the probe relative to the respective target body with a target position threshold value of the electrical position signal which is associated with each solid target body and, when the electrical position signal exceeds the target position threshold value for a particular solid target body, to issue a control signal, e.g. a feedback control signal. The control signal indicates that the probe has been guided into the target region defined by the particular solid target body.
- A feedback system. The feedback system may be configured to generate a user perceivable feedback to indicate whether contact has been made with a specific solid target body or whether the probe has been position in a particular predetermined target region. Different feedbacks may be provided for different contacted solid target bodies or target regions. In particular, it may be distinguished by means of the feedback, which solid target body has been contacted if a plurality of solid target bodies is provided or which target region has been reached if there is a plurality of such regions. The feedback is preferably generated in response to or by the electrical contact signal or a feedback control signal generated by the position control unit, when the probe has reached a predetermined target region. The feedback may indicate that the probe has been guided into a position within a particular predetermined target region where the particular solid target body which is associated with the electrical position signal or target position threshold value is arranged in. The feedback system may be an optical feedback system. For example, the feedback system may comprise a plurality of light sources. Each light source may be electrically conductively connected to a separate one of the solid target bodies. Accordingly, when one light source emits light, it can be determined which of the solid target bodies has been contacted. Of course alternative versions of a feedback system are also possible such as a tactile feedback system and/or a display, which indicates which region of interest has been contacted, by means of highlighting the respective region in an image of the cranium for example, where the image preferably shows the location of all predetermined target regions or solid target bodies in the inner volume.

In an embodiment, the mechanical contact between the probe and the solid target body closes an electrical circuit. The contact signal may be realized by current flowing through the electrical circuit, where the electrical contact detection circuit is preferably part of the closed electrical circuit. Accordingly, the feedback system may be realized by providing an electrical power or voltage source, e.g. a battery within the system, where the light source may be connected in series with the probe and the solid target body associated with that particular light source when the target body is contacted and the electrical circuit is closed. Then the light source emits light. However, the electrical circuit is usually open unless the probe contacts an associated solid target body.

In an embodiment, the system comprises a carrier. The head member may be moveably connected to the carrier.

In an embodiment, the head member may be moved laterally along the carrier, preferably in a plurality of directions, e.g. two different directions. The head member may be guided by one guide rail in one direction. The sub-assembly of the head member and the guide rail may be connected to a second guide rail which guides movement in a second direction. In this way, the head member may be moved to arbitrary positions along the carrier as defined by the guide rails. The guide rails may extend perpendicularly with respect to one another.

In an embodiment, the head member is rotatable and/or tiltable relative to the carrier, preferably in any lateral position on the carrier, into which the head member can be moved. The rotatability or tiltability of the head member may be realized by a ball joint. The ball joint may be provided between the head member and the guide rail to which the head member is connected, for example.

In an embodiment, a method of simulating or training the medical procedure comprises the following steps. A system is provided as disclosed above. Optionally, an opening or hole is generated in the head member to provide access to the inner volume. This may be done by drilling, preferably in one of the replaceable pieces or closure parts discussed above. A probe may be guided into the inner volume defined by the head member, for example through an opening or hole as previously defined or which was already present. The probe may be guided, e.g. through the material of the brain member, into the predetermined target region. Via the feedback system, it may be checked, whether the solid target body in the predetermined target region has been contacted with the probe or whether the probe is arranged in the target region. This method may be applied to train surgeons, e.g. neurosurgeons.

In an embodiment, a method of checking the accuracy of or of calibrating a navigation system comprises the following steps. At first, a system is provided as discussed above. An image data of the head member of the system is generated by means of a medical imaging system, e.g. a computer tomography system. The image data may include data indicative for the position of the respective solid target body within the inner volume of the head member. The image data may be fed to a navigation system, e.g. via a data carrier or from a network or data stream. The navigation system may be configured to guide movement of the probe to an intended position in the inner volume of the head member. The intended position, e.g. to which the navigation system should navigate the tip of the probe, is chosen to be the position of one of the solid target bodies of the system or a predetermined target region defined by one of the solid target bodies of the system. Then, the probe, under control of the navigation system, is guided to an end position in the inner volume, e.g. manually by the user, where the end position is identified as being the intended position by the navigation system. Then, it may be checked or determined, whether the end position of the probe is indeed the intended position by detecting or determining, whether the contact signal, which indicates the contact of the probe and the solid target body in the intended position has been generated or whether the control signal has been generated by the position control circuit. This may be done by checking, whether the appropriate feedback has been generated. If the end position is the intended position, the navigation system works accurately. If the end position is different from the intended position the accuracy might have to be improved or the system might have to be recalibrated. The method can be performed iteratively with intermediate calibration steps, until the required accuracy is attained. In this way, the present arrangement and system enable a validation or accuracy check of a navigation system which is, of course desirable. The system can be used to calibrate a navigation system for example.

In an embodiment, a method of manufacturing an arrangement with a plurality of solid target bodies may include the following steps. At first, a plurality of different target positions is determined. Each target position may be a position for one target body within the inner volume. Each target position may be configured to be arranged within an associated target region within the inner volume. Thereafter, a target carrier may be manufactured. The target carrier may be provided with a plurality of distinct mounting portions for solid target bodies. The respective mounting portion may be formed at the end of a protrusion and/or within a recess as disclosed further above. The target carrier may be manufactured by means of an additive production method, e.g. 3D-printing. Each mounting portion may define one mounting position for one solid target body. The relative arrangement of the mounting positions with respect to one another is expediently chosen so as to correspond to the relative arrangement of the target positions relative to one another. One solid target body may be mounted and/or fixed on each mounting portion in the mounting position. The target carrier with the target bodies or without the target bodies mounted to it, may be secured, preferably releasably, to a head part which is part of the head member, such that the target bodies are arranged in the target positions. Before or when the solid target body is mounted on the mounting portion, it may be electrically conductively connected to an electrical conductor. After the solid target bodies have been mounted on the target carrier, preferably after the target carrier has been secured to the head part, the brain member may be formed which preferably covers the solid target bodies. The head part to which the target carrier is secured may be releasably secured to another head part as disclosed previously. The other head part may act as a form which receives liquid material for the brain member. The target bodies may be embedded in the still liquid material for the brain member which, thereafter, may harden to from the brain member. The target regions are expediently chosen to be arranged in regions of the inner volume which are characteristic for different sections of the ventricular system and/or different regions of the cerebral tissue in a brain.

A particularly advantageous embodiment relates to an arrangement for simulating and/or for training of an intracranial medical procedure, in particular a surgical procedure, e.g. a neurosurgical procedure, the arrangement comprising:
- a head member that is provided to act as a substitute for the cranium, the head member having a wall defining an inner volume of the head member,
- a target carrier, one solid target body or a plurality of solid target bodies being positioned on the target carrier, wherein the solid target body is arranged relative to the head member such that the respective solid target body is arranged within a predetermined target region in the inner volume of the head member

Further features, expediencies and advantages of the present disclosure may become apparent from the following description of the exemplary embodiments in conjunction with the drawings.
Figures 1A through 1C illustrate an embodiment of a head member on the basis of different views.
Figures 2A through 2C illustrate an embodiment of a target carrier on the basis of different views.
Figures 3A through 3C illustrate another embodiment of a target carrier on the basis of different views
Figure 4 illustrates an embodiment of a system for training and/or simulating a medical procedure.
Figure 5 illustrates different steps during virtual modelling of elements for the manufacturing of the head member provided with a target carrier with the aid of software.
Figure 6 shows a table which shows information about two different embodiments of the target carrier (panel 1 and panel 2), in particular with respect the configuration and relative arrangement of the solid target bodies.
Figure 7 illustrates steps during manufacturing of an embodiment of the system on the basis of photographic representations of different stages.
Figure 8 illustrates the use of an embodiment of the system in different representations.
Figure 9 shows CT images of an embodiment of a head member.
Figure 10 illustrates another embodiment of a system for training and/or simulating a medical procedure

The learning of surgical skills is a procedure which depends on a long-time, continuous and intensive practical training. This especially applies for a subject as neurosurgery because actions often take place in sophisticated spaces with limited ranges of motion, sometimes even to millimeters. In order to learn and enhance those skills, practicing in simulation models is common since antiquity. However, due to recent technical improvements in the field of computer simulation, computer vision and 3D printing, practicing of surgical skills using VR-based or PM-based simulators became a new option. Both simulator types - VR-based and PM-based - mainly focus on realistic visual and tactile aspects which are indispensable modalities to become surgical experienced. However, the majority of neurosurgical simulators as well as simulators in other subjects are VR-based, whereas only a few PM-based ones exist such as the ones in the publications cited in the introductory section.

Beside the improvement of neurosurgical results by simulator trainings, neuronavigation has found its way into the neurosurgical operating room in the last two decades, contributing significantly to the accuracy of neurosurgical procedures. Since then, developments and improvements of navigation techniques in terms of systems and algorithms which are compatible with every day and emergency procedures, are issues which are subject to research and development in many companies and/or universities. This trend requires a new simulator type: Neurosurgical training must not be reduced to practice tactile and spatial orientation skills by means of anatomically realistic models but has to include the handling of arbitrary cerebral navigation techniques. Moreover, it is evidently advantageous to evaluate the specific targeting accuracy of the navigation system or technique which should be applied before using them in real surgeries.

In the following text, concepts are provided which facilitate provision of a simulation system for simulating or training intracranial surgical procedures, such as neurosurgery procedures, in an ex-vivo setting using a PM-based system. Identical elements, elements of the same kind and identically acting elements may be provided with the same reference numerals throughout the drawings.

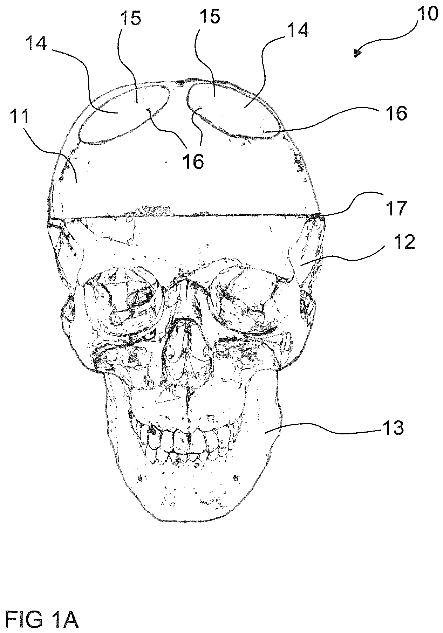

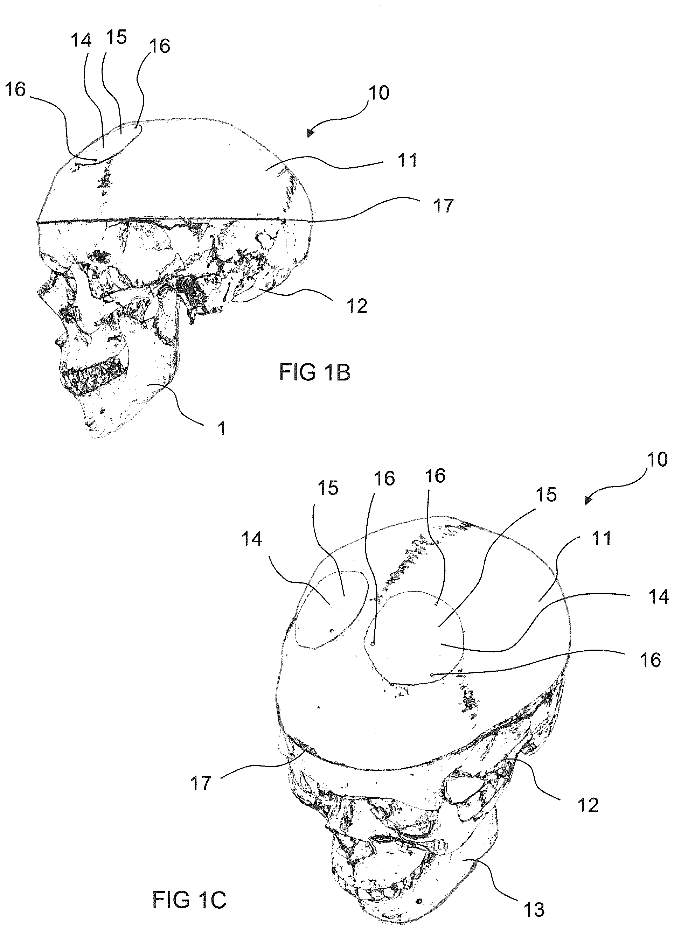

Figures 1A through 1C show a head member 10 based on a front view, in Fig. 1A, a side view, in Fig. 1B, and a perspective view from the top in Fig. 1C. The head member 10 may be a, preferably anatomically accurate, model of a skull, e.g. a human skull. Thus, the head member may be formed to resemble a human head or skull. The head member 10 comprises a first head part 11, e.g. corresponding to the skull cap, and a second head part 12, e.g. corresponding to the skull base. The head member 10 further comprises a third head part 13, e.g. corresponding to the lower jaw. The representation in the figures were derived from CAD-data based on data retrieved from a 3D scan of a, preferably anatomically accurate skull model. Consequently, the head member is of multipart construction. The first head part 11 and the second head part 12 are, preferably releasably, connected to one another to provide access to the interior. The connection between the two head parts is expediently effected via fixing means, which are non-metallic, e.g. of plastic such as plastic screws. The third head part 13 may be in general dispensed with. However, some navigation techniques, e.g. non-neurosurgical techniques, may rely on markers supplied in the region of the lower jaw. Thus, e.g. in order to allow these techniques to be evaluated as well, the third head part may be provided. The third head part 13 may be permanently, e.g. movably or immovably, connected to the second head part 12. Within the first head part 11, one or more openings 14 are defined. The respective opening may be located in the region surrounding the left and/or right Kocher's point.

Surgeries such as neurosurgeries often require access to the interior of the cranium or skull. During surgeries holes are often generated by drilling. In order to provide access to the interior, the openings 14 are provided. The openings 14 may have a diameter of more than 20 mm such as more than 30 mm, e.g. 33 mm. The respective opening 14 is closed with a closure part 15. The respective closure part 15 may be made of a different material than the first head part 11. The closure part 15 may be made of a material which mimics or imitates cranial bone. The thickness may be greater than 5 mm or greater than 8 mm, e.g. 9 mm. The closure part 15 is, preferably releasably, secured to the head part 11. To provide access to the interior, a hole may be drilled into the respective closure part 15 in order to provide access to the interior of the head part, which expediently retains the brain member. The hole forms an opening in the closure part which has a diameter less than the one of the opening 14 in the first head part 11. From this opening, a probe or tool can be guided from the exterior of the head part into the interior. The closure part 15 is expediently releasably connected to the first head part 11. Thus, the closure part 15, with a hole can be easily exchanged, after a simulation process has been concluded and the head member can be prepared for a subsequent simulation procedure by removing the used closure part with the hole and providing an unused closure part 15 without a hole and connecting the closure part 15 to the head member or first head part 11. This saves costs, as the remaining structure can be re-used. Still further, the closure part 15 can be adjusted with its consistency to cranial bone more easily. The connection between the closure part 15 and the first head part 11 can be effected by one or a plurality of fixing members 16. The respective fixing member 16 is expediently non-metallic. The respective fixing member expediently comprises a plastic material. The respective fixing member may be a screw such as a plastic screw. The use of non-metallic fixing members has the advantage that, during a medical imaging procedure, such as a computer tomography, which the head member may be made subject to, do not produce a significant artefact, image or shadow within the region of interest, i.e. the one corresponding to the interior of the head member. A contact or boundary area between the first head part 11 and the second head part 12 is shown by line 17. Line 17 may extend circumferentially around the head member 10. The contact region between the first head part 11 and the second head part 12 may be arranged within one common plane. The plane may be perpendicular to a longitudinal axis of the head member which extends from the region of the jaw in the second head part towards the first head part as seen in the front view of Fig. 1A.

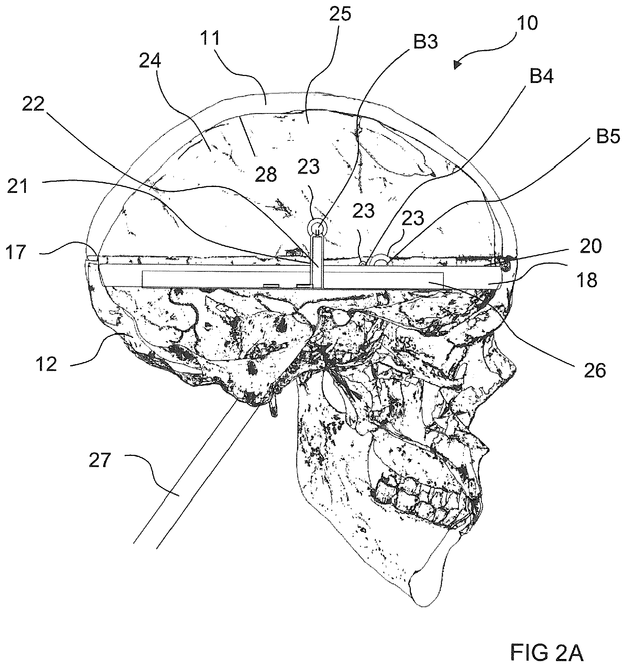

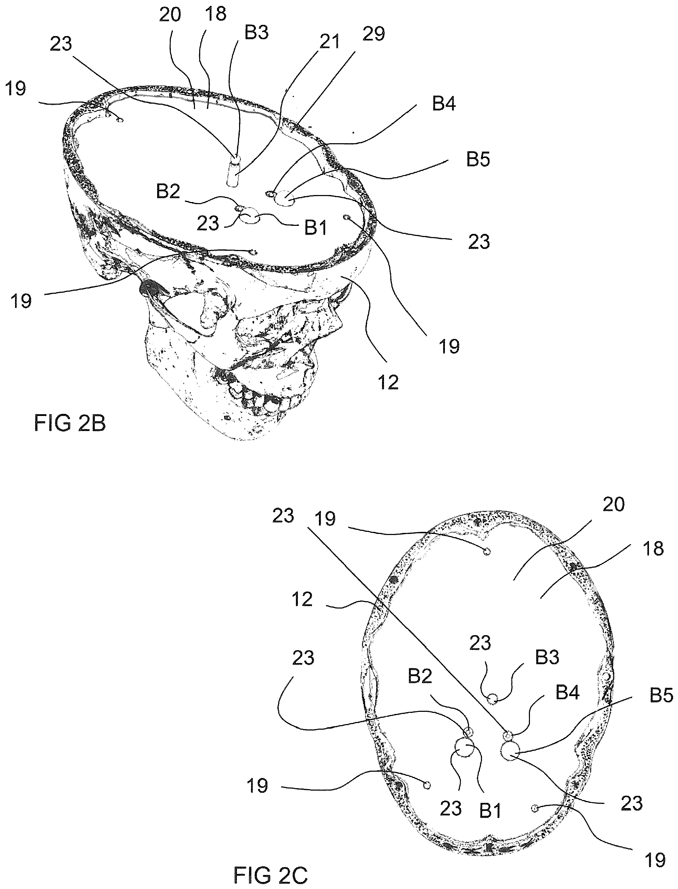

Figures 2A through 2C illustrate a head member for simulating a medical procedure, e.g. for simulating an EVD procedure where the ventricular system of the brain is punctured with a probe, e.g. a mandrin, from the exterior in order to drain ventricular fluid or liquid from the system or a procedure for measuring intracranial pressure. EVD is a medical procedure often conducted in emergency rooms, which is why training of this procedure is particularly important. Fig. 2A shows a section of view through the head member 10 where the first head part 11 is connected to the second head part 12, whereas figures 2B and 2C show a perspective view and a top view respectively, where the first head part 11 is not connected to the second head part 12.

The proposed arrangement and system utilize a plurality of solid target bodies, which are electrically conductive and are arranged in different locations within the inner volume 24 of the head member. The inner wall 28 of first head part 11 may extend along all of the solid target bodies. That is to say, as seen in plan or top view, the inner wall 28 may cover all of the solid target bodies. The inner wall may be closed, except for maybe the openings 14 which are provided as discussed before. In figures 2A through 2C, a plurality of solid target bodies, for example 3 or more bodies, such as five solid target bodies, B1 through B5 are shown. The target bodies are connected and secured relative to a target carrier 18. The target carrier 18 is secured to the second head part 12. The target carrier may be secured to the second head part 12 using fixing members 19 such as non-metal fixing members e.g. plastic fixing members like plastic screws. The target carrier 18 spans the or extends over the entire inner free space of the respective head part or head member.

The target bodies B1...B5 are formed spherical. However, other geometries are also possible. The target bodies are arranged in different elevations or heights with respect to a main surface 20 of the target carrier 18. For example, target body B3 is elevated with respect to the main surface, whereas one or more of the remaining target bodies is arranged in a recess of the target carrier such that not the entire surface of the target body protrudes from the carrier but a part is arranged below the surface level of the main surface. Still further, as is apparent in Fig. 2A through 2C, two target bodies, especially two pairs of two target bodies, that is to say target bodies B1 and B2 and/or target bodies B4 and B5 are arranged close to one another such as at a distance of less than or equal to 2 mm. These target bodies may have different dimensions, for example different diameters. The target body B2 may be of a smaller diameter than the target body B1. Target bodies of different dimensions within the same target region may be used to train different accuracies or to test different accuracies of a navigation system such as a neuronavigation system used to navigate a probe or a different tool within the cranium to a desired end position. Target bodies in different target regions may be separated by 10 mm or more, e.g. by 20 mm or more. A protrusion 21 extends away from the main surface 20, for example perpendicularly to the main surface. On the protrusion 21, the elevated target body B3 may be mounted. Of course, it should be readily apparent that the target bodies can be freely distributed within or over the target carrier 18 either in recesses and/or arranged on protrusions or being exclusively arranged in recesses or on protrusions. The protrusion 21 is hollow. An electrical conductor 22 is arranged within the hollow. The electrical conductor 22 may be rigid, for example a pin or other rod-like feature. The target body is connected to the conductor. The other target bodies are also connected to conductors, which may be connected with each other, e.g. in parallel, or be separated from one another. The electrical conductor 22 may have a connection means at its end facing the solid target body, preferably a mechanical connection means such as a thread for example. The solid target body connected to the conductor may have a corresponding connecting means such that the two connection means can cooperate with one another to attach the solid target body to the electrical conductor. Thus, between the electrical conductor 22 and the respective solid target body a reliable and stable connection can be established. The conductor itself may be fixed relative to the target carrier. Alternatively, the target body may be directly secured to the target carrier, e.g. by glueing.

As is apparent from Fig. 2A, the target bodies are embedded in a brain member 25. The brain member 25 may be made of gellan gum, preferably provided with an additional antifungal ointment. The brain member 25 may be poured into the first head part in liquid form hardened afterwards to its final, preferably gelatinous, consistency. Before the hardening is completed the first head part is connected to the second head part and the solid target bodies are embedded within the material for the brain member. When still in its liquid form, the material may be relatively hot. Preparation of gellan gum may need hot water, e.g. of 90 °C or more. Thus, the protrusion 21, e.g. of plastic, may tend to deform when exposed to the still hot material, when the first head part with the hot material is guided towards the second head part. Deformation of the protrusion would move the target body, potentially away from the intended position. The rigid electrical conductor 22 may prevent the protrusion from deforming. The brain member 25 may contact mechanically the target carrier on the main surface 20 and/or the inner wall 28 of the first head part 11. In order to avoid a short circuit or conduction path between different electrically conductive target bodies through the electrically conductive brain member (gellan gum is electrically conductive, for example), an electrically insulating layer 23 is provided around the respective solid target body B1...B5. The insulating layer may be of modelling clay, for example.

Within the target carrier 18 and, particularly on that side of the carrier remote from an inner volume 24 and/or remote from the inner wall 28, a conductor channel 26 is formed. The conductor channel 26 may be a void of the target carrier 18. Within the conductor channel 26, electrical conductors connected to each of the solid target bodies may be guided. The electrical conductors of each solid target body may be conductively connected such that the target bodies may be electrically connected in parallel. Alternatively, the conductors associated with the bodies may be electrically separated. In Fig. 2A, a signal conductor 27, e.g. a cable, is depicted. This signal conductor 27 may be connected to the solid target bodies. On the side remote from the target bodies, it may be connected to a power source. If an electrically conductive probe is guided into the inner volume 24 and contacts one of the solid target bodies, an electrical contact may be established between the probe and the solid target body after having penetrated the electrically insulating layer 23. The probe may be connected to a power source, in particular to the opposite pole of the same power source as the signal conductor 27, such as a battery. Thus, touching the solid target body with the probe may close an electrical circuit between the probe and the solid target body. A light source may be provided as a display member in that circuit and the lamp may emit light when the associated solid target body is contacted. Different solid target bodies are associated with different light sources, for example. Of course, other optical feedback means for providing information on whether a particular one of the solid target bodies has been contacted may also be available. Furthermore, instead of closing a circuit with the contact, the mechanical contact could be used to generate an electrical contact signal other than a current flowing through the probe and the solid target body. For example, the contact signal could be a voltage pulse, generated by a piezo-electric element which generates voltage when deformed on account of the mechanical contact with the solid target body the pulse signal may be guided through the solid target body and can be further processed, e.g. by an electronic control unit which controls a display or the like.

If the material of the brain member 25 is not electrically conductive but electrically insulating, the insulating interlayer or an interlayer of a different material, potentially even electrically conductive, may nevertheless be provided in order to simulate a tactile difference resulting from a change in the consistency when the target region where the solid target body is arranged is reached with a probe. Solid or liquid interlayers can be used. Also, two or more interlayers can be applied for the respective target body, where on is electrically insulating and another one tunes the tacile feedback, where the latter is preferably arranged between the electrically insulting interlayer and the target carrier. Further, the probe or tool may be a mandrin or another tool used during the medical procedure to be simulated or trained such as an EVD procedure or another surgical procedure. The outer contour of the lateral surface of the target carrier 18 is expediently adjusted to the inner contour of an inner wall 29 of the second head part to which the target carrier is secured. Alternatively to securing the target carrier to the second head part 12, it could also be secured to the first head part 11. However, securing the target carrier to the second head part 12 facilitates forming the brain member 25 on the target carrier 18.

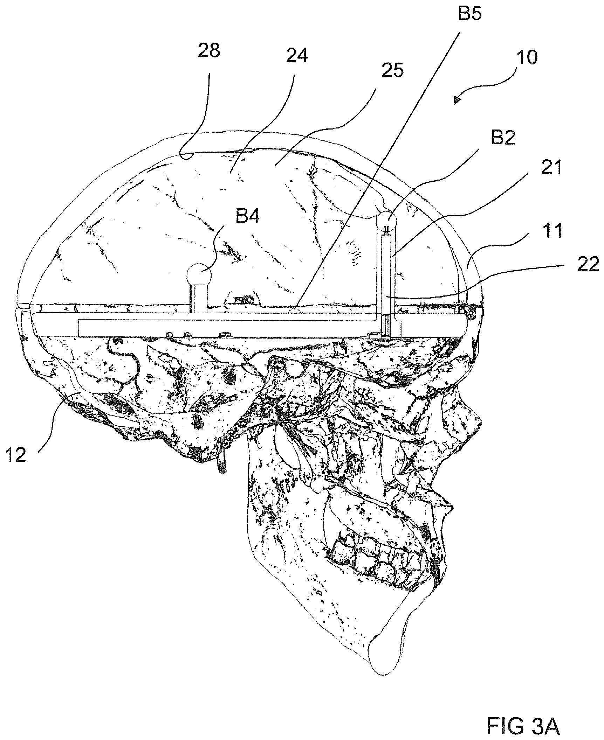

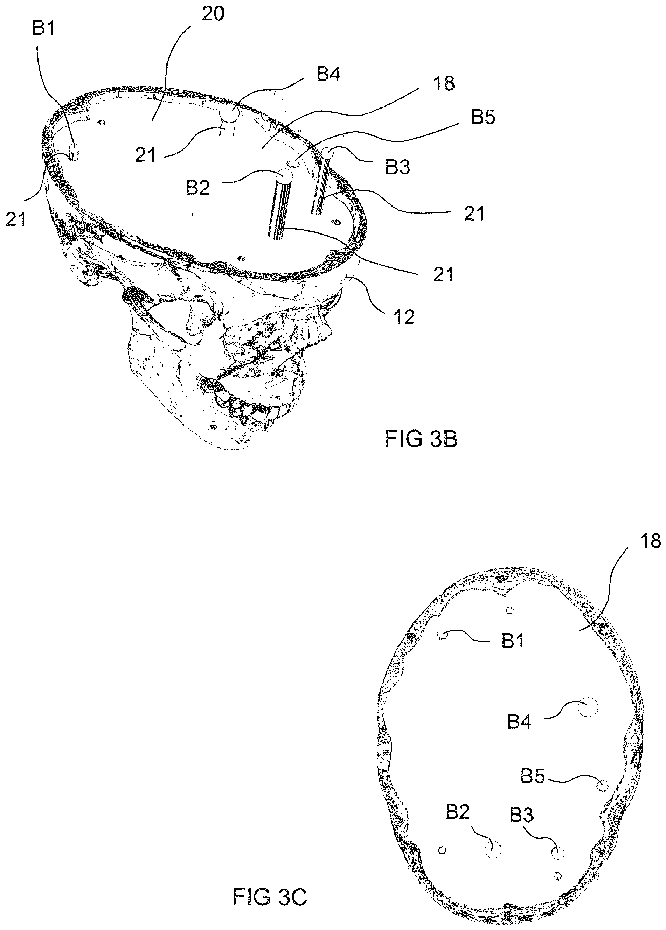

As already discussed before, the target carrier 18 with solid target bodies mounted to it can be readily exchanged by a different target carrier. The other target carrier may be adjusted to a different procedure and facilitates simulation of a different procedure. Figures 3A through 3C show another embodiment of the target carrier 18 which is mounted within the head part or head member 10. The Fig. 3 embodiment, except for the arrangement of the target bodies corresponds to the one described previously in conjunction with figures 2A through 2C. Accordingly, it is focused herein on the differences. As opposed to the Fig. 2 embodiment, the signal conductor 27 and the electrically insulating layer 23 are not explicitly shown herein, but are, nevertheless present, preferably. Again, a plurality of target bodies B 1 through B5 are arranged and connected to the target carrier 18. As opposed to the embodiment in Fig. 2, where regions in the ventricular system of the brain were of interest for a simulation or training procedure, different regions in the brain are intended for the simulation by the presently proposed target carrier 18. Target body B5 is arranged within a recess in the target carrier whereas the others are arranged elevated with respect to the main surface 20. Diameters and heights of the solid target bodies may vary.

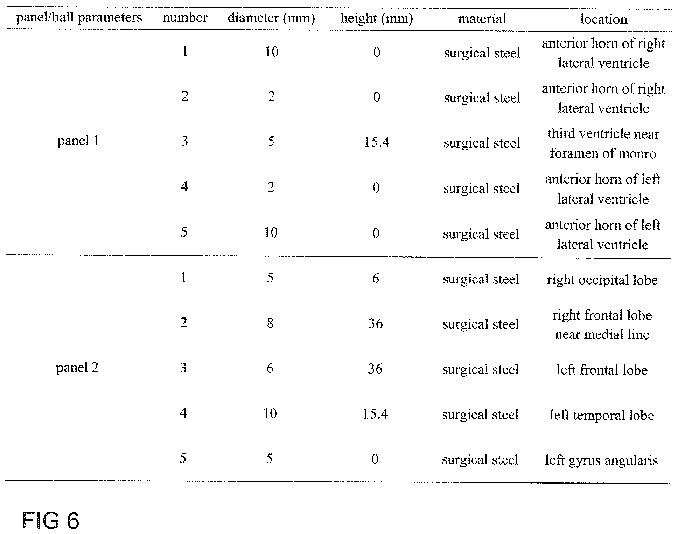

For the target carriers employed in figures 2 and 3, parameters for diameters and heights of the respective spherical balls as target bodies are listed in the table shown in Fig. 6, where "panel 1" refers to figure 2 and "panel 2" refers to figure 3. Also, intended locations of the respective solid target body, i.e. the predetermined regions within the cranium and/or the brain are shown in this table.

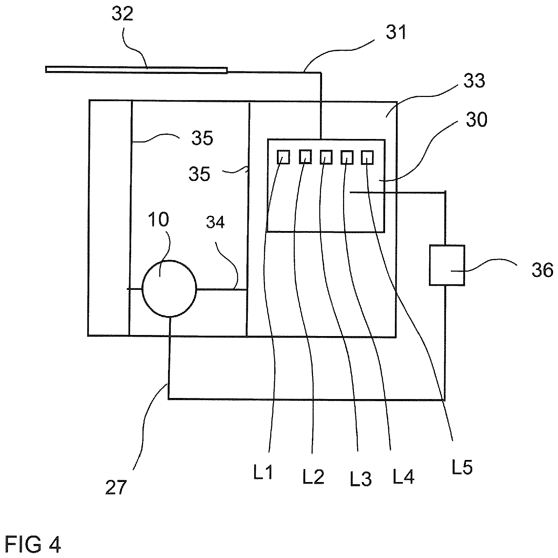

Fig. 4 shows an embodiment of a system for training or simulating a medical procedure. The shown system is illustrated in a very schematic fashion. The system comprises one of the head members 10 disclosed above. Via the signal conductor 27, the head member 10 and particularly, the solid target bodies within the head member are electrically connected to a power source 36, e.g. a battery. The power source is further connected to an optical display system 30 which comprises light sources L1 through L5, e.g. LEDs or other light sources, where one light source is associated with each solid target body B1...B5. Via a probe or tool connector 31, a probe or tool 32 is conductively connected to the optical display system 30, preferably to each light source. The light sources may be connected in parallel to the probe or tool.

The system comprises a system carrier 33. The head member 10 is slidably or movably connected to a first guide rail 34. Along the guide rail 34, the head member 10 may be displaced relative to the system carrier 33. The guide rail 34 is movably, e.g. slidably connected to one second guide rail 35 or a system with two parallel guide rails 35. The guide rail 35 is expediently oriented perpendicularly relative to the guide rail 34. Along the guide rails 35, the guide rail 34 may be slid or moved relative to the system carrier 33. The head member 10 may be connected to the system carrier via a ball joint (not illustrated in the drawing). The ball joint may connect the head member 10 to the first guide rail 34. In this way, the head member may be tilted relative to the surface of the system carrier 33, e.g. into a position appropriate for the medical procedure which is simulated or trained.

If the probe 32 mechanically contacts one of the solid target bodies within the head member 10 one of the lamps expediently only one of the lamps emits light and such gives an optical feedback that the particular solid target body has been contacted. This can be used to determine and/or check whether a desired target region within the head member 10 has been reached. This may be used either for training a specific medical procedure such as one of the procedures mentioned above or for checking the accuracy of and/or calibrating a (neuro)navigation system or algorithm.

The navigation system may comprise:
- A probe tracking system which provides data on the position of the probe. This system comprise one or more markers connected to the probe, where the movement of the markers is tracked using one or more cameras, for example.
- A patient or head member tracking system. This system may comprise one or more markers connected to the patient, e.g. the head of the patient, or the head member, the movement of the marker being tracked using one or more cameras, for example. In the present system, the head member is preferably fixed, such that a patient or head member tracking system may not be needed, but could nevertheless be provided in the navigation system which is to be tested.
- A guiding system which uses, e.g. previously acquired, image data of the head member and currently determined data from the probe tracking system on the probe position and, if applicable, data from the patient or head member tracking system, to generate guide data on how the probe is to be moved relative to the head member in order to reach an intended position. The guide data may be used to show the positon or the movement of the probe in an image for example.

For checking the accuracy of the navigation system, a medical imaging procedure may be conducted on the head member. The imaging data may contain data regarding the specific positions of the solid target bodies within the inner volume of the head member or the head part. Using the navigation system, the probe is navigated within the interior of the head member to an end position which is identified by the system as corresponding to the intended position, e.g. the position of a desired target region or solid target body which should be contacted. If the end position determined by the navigation system and the one of the solid target body coincide, the appropriate control signal and, preferably, an optical feedback is generated. If not, the navigation system operates inaccurately and it might be re-calibrated and/or a hint might be given to a user that there may be inaccuracies in the navigation system.

In the following, the manufacturing of the head member and the system described above is briefly describe in conjunction with figures. Initially, the skull cap and skull base of an anatomically accurate 3D human skull model as well as different brain parts (cerebellum, different cerebral lobes, corpus callosum, basal ganglia, hippocampus, brain stem and/or ventricular system) of a 3D human brain anatomy model were scanned using a scanner, such as a white light fringe projection scanner. The scans were stored as datasets, e.g. as STL-datasets, for further processing. One dataset is then preferably present for the respective part - skull cap, skull base and/or brain parts. Further, circular voids or openings were formed in the skull cap around the left and right Kocher's point, e.g. with diameters of 33 mm. The skull cap with the opening was scanned again. The scan was stored in a further dataset.

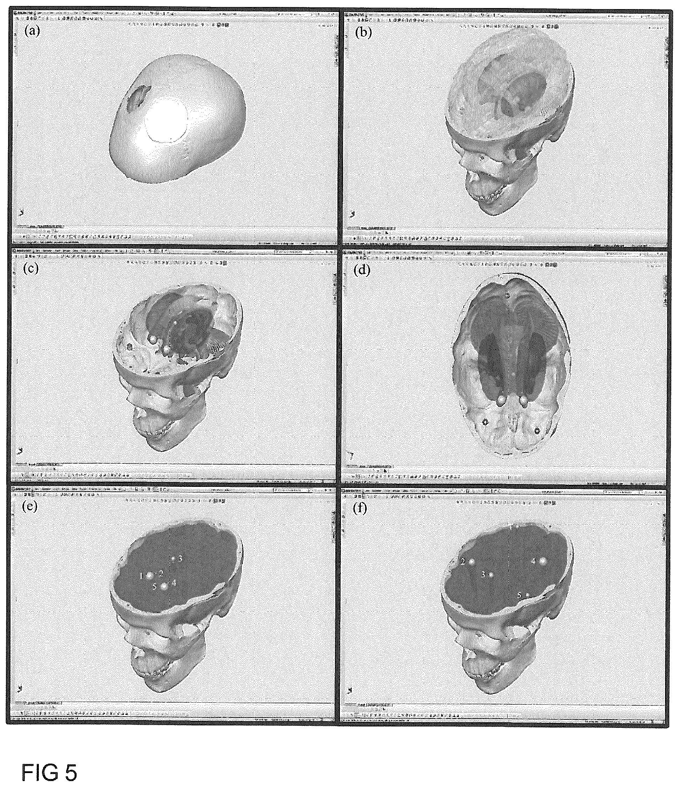

After having loaded one, more or all of the acquired datasets into a software, e.g. a CAD-software, like SOLIDWORKS, fitting void filling pieces or closure parts for the skull cap were constructed, e.g. with a thickness of 9 mm, to imitate cranial bone (Fig. 5 (a)) virtually within the software. Also the brain model or brain member was scaled and aligned inside the skull model anatomically precise (Fig. 5 (b)) virtually within the software. Next, e.g. five, balls or target bodies as target points were positioned within the ventricular system. Further, a fitting skull base panel or target carrier was designed virtually within the software in order to fix the balls to the skull base, e.g. with void and hollow drum joints (Fig. 5 (c)-(e), panel 1 in the table in figure 6), taking into account the desired target positions within the brain member. The above described procedure can be easily adapted to design arbitrary panels for specific neurosurgical interventions, merely as an example for supratentorial hemorrhage- or tumor-applications (Fig. 5 (f), panel 2 in the table in figure 6).

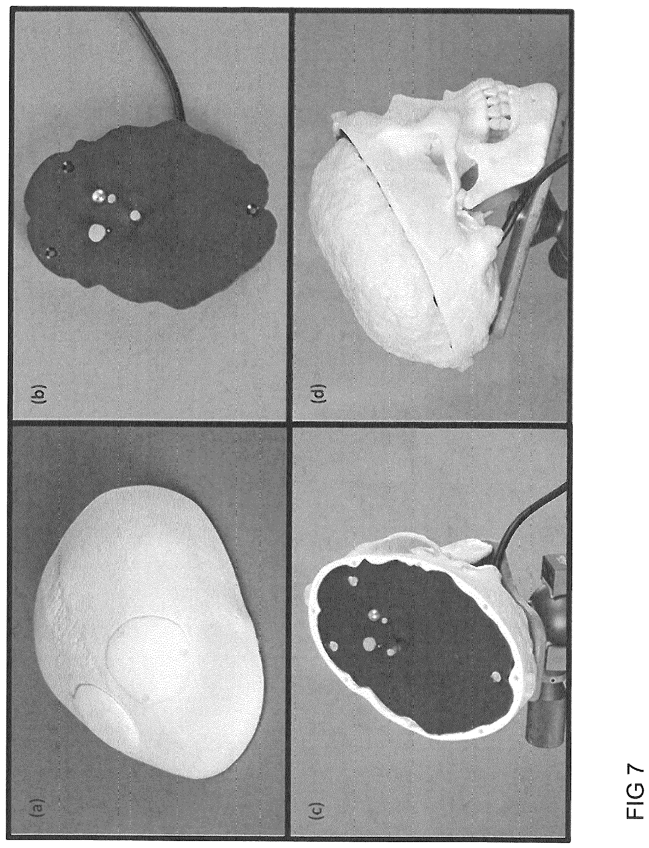

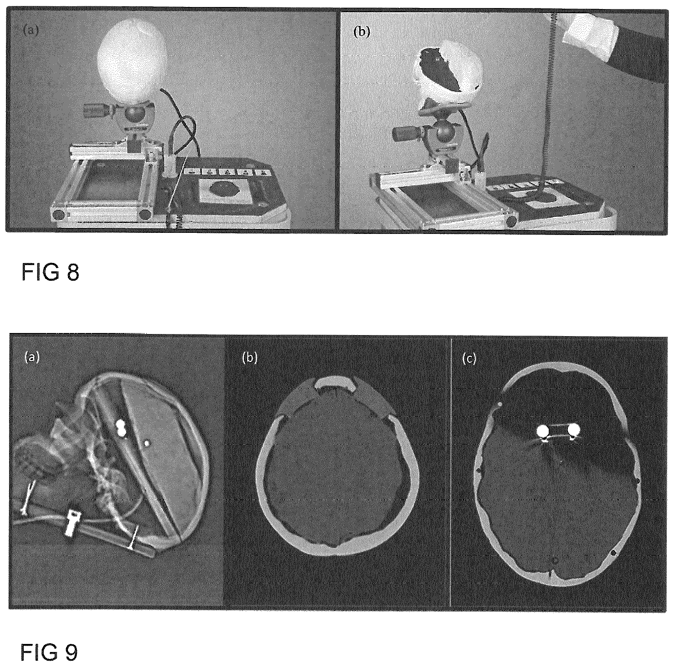

Based on the models which have been generated virtually using the software, the head member with the integrated replaceable target carrier were manufactured. In a first step, the replaceable void filling pieces or closure parts and the skull base panel or target carrier were fabricated additively, e.g. by a 3D printer. The void filling pieces were fixed by plastic screws at clear positions outside the skull cap (Fig. 7 (a)). For panel manufacturing, the balls made from surgical steel were fixed in the void joints and at the hollow drum joint's top, the balls were electrically conductively connected with lamps installed on an optical display device by cable joints, e.g. via USB port, and the balls were shielded electrically against the electro-conductive cerebral tissue imitating material of the brain member by covering them with an, expediently thin, insulating layer, e.g. a modeling clay layer (Fig. 7 (b)). Subsequently, the panel was fixed, e.g. by plastic screws, at its predetermined and fixed position inside the skull base (Fig. 7 (c)). For the purpose of modeling and assembling the cerebral tissue imitating material, the skull cap was filled with high acyl gellan gum for the brain member, preferably enriched with an antifungal ointment to delay mold formation. Then the skull cap was attached to the skull base with the panel in its interior (Fig. 7 (d)). Lastly, the complete 3D human skull model or head member was connected to and/or fixed at, preferably via a ball joint and/or slides or rails, at a cover plate of a box or carrier. Inside the carrier the power source, e.g. a battery may be arranged. As the skull model is fixed by a ball joint and slides to the carrier the system is suitable for adjusting to arbitrary spherical and horizontal head positions (Fig. 8 (a)). Thus, in the end, in the interior of the skull model or head member, e.g. five, balls manufactured from surgical steel with differing locations and diameters representing different intracranial target points are fixed to the replaceable skull base panel. The balls are surrounded by a cerebral tissue imitating material and each of it is electrically contacted or connected to a lamp, preferably only one lamp, installed on the optical display device, where the lamp emits light or is being illuminated if the circuit gets closed by contacting the surface of the ball or target body with an, e.g. current-carrying, target tool, such as a mandrin as used for EVD-applications (Fig. 8 (b)).

The proposed head member 10 for training or simulation systems or arrangement can be made subject to standard medical imaging procedures, e.g. computer tomography (CT). Thus, it is configured to check the accuracy of navigation systems and/or software. The CT capability of the skull or head model is advantageous to receive appropriate image data for planning purposes to prove the accuracy of arbitrary neuronavigation systems and algorithms. To prove the compatibility with CT methods, an overview scan for model positioning followed by a full computer tomographic image reconstruction of the complete skull or head model has been performed. The overview scan shows the correct positioning of the model having all different materials in its interior (Fig. 9 (a)). Furthermore, the full scan shows different Hounsfield units regarding the skull model, void filling pieces, cerebral tissue imitating material and balls (Fig. 9 (b), (c)). Thus, the radio-opaque target bodies have a good identiflability within the surrounding brain member, e.g. of gellan gum.

It is readily apparent, that arbitrary intracranial regions can be addressed using appropriately designed target carriers. The regions may be supratentorial regions and/or infratentorial regions, where for infratentorial regions, the position of the target carrier within the head member 10 might need to be adjusted as compared to what is shown in the drawings, e.g. shifted down a little bit. However, it is readily apparent that this is feasible.

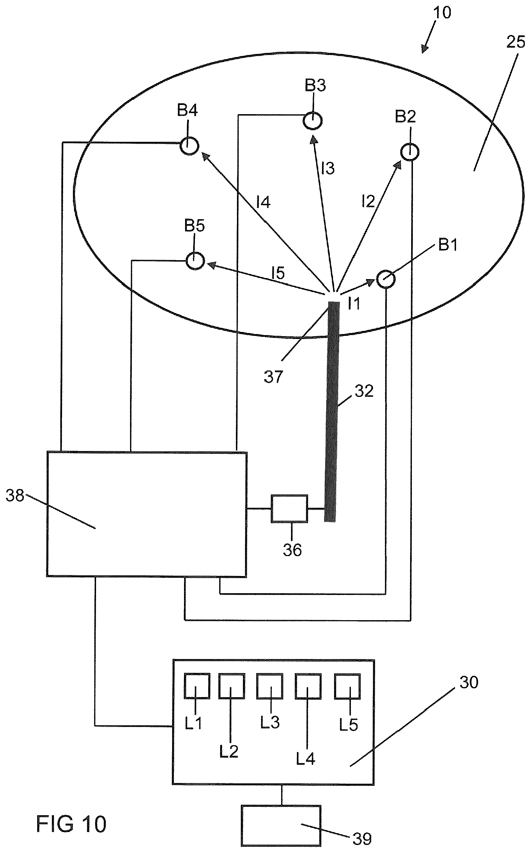

Moreover, above, it has been discussed that mechanical contact is established between the probe and the respective target body to check whether the probe has been maneuvered to the intended position. However, the system can also be realized by checking in another manner, without requiring mechanical contact, whether the probe has been maneuvered to the intended position. Such an embodiment of a system is schematically illustrated in Fig. 10. It should be appreciated, that the following discussion focusses on the differences over the previously discussed embodiments. Thus, the features discussed previously may apply as well for the present embodiment and vice versa, if it is not apparent from the present description that they are incompatible. In the figure, only the interior of the head member 10 is shown and no head part is illustrated, although a head part or two head parts are present expediently. A plurality of solid target bodies B 1 through B5 are distributed within the interior of the head member. The solid target bodies are embedded in the brain member 25. The material of the brain member may be electrically conductive and/or gellan gum. As opposed to the previously discussed concepts, there is no insulating layer 23 around the respective solid target body B1 through B5. Consequently, the respective electrically conductive solid target body is conductively connected to the brain member 25, e.g. by mechanical contact between body and brain member material. The brain member is electrically conductive as well. Thus, all of the target bodies are conductively connected with each other. Accordingly, the probe 32 when arranged in the interior of the head member 10 will be conductively connected to each of the solid target bodies. The probe is also connected with the power source 36. Consequently, a current (I1 through I5) may flow between the tip of the probe 32 and the respective solid target body (B1 through B5), e.g. from tip to body as illustrated by the arrows. The magnitude of the current may depend on the distance of the tip 37 or end of the probe 32 from the respective solid target body. The currents I1 through I5 may be used as electrical position signal indicative for the position of the probe relative to the respective target body B1 through B5. Thus, references to the current may be regarded as references to a general electrical position signal.

Accordingly, if a reference measurement is conducted for each solid target body which measures the current between the probe and that solid target body in different distances between the probe and the target body and/or in different regions of the brain member, a mapping or table can be generated for each solid target body which links the current to the distance of the tip from that solid target body. For each of the target bodies or the associated current threshold values can be chosen which delimit a region of interest or target region around that solid target body. If one of the currents exceeds the threshold value or lies in an interval delimited by the threshold value, the tip of the probe is appropriately close to the solid target body associated with this current and, consequently in the predetermined target region defined by that solid target body. The system comprises a position detection or monitoring circuit 38. The threshold values may be stored within a data storage of the position detection circuit 38. The position detection circuit may monitor each of the currents I1 through I5 during operation of the system and, if one of the currents exceeds a predetermined value, issue a control signal, e.g. a feedback control signal. The control signal indicates that the probe is within the predetermined target region defined by the solid target body which is associated with the current or the threshold value. The feedback control signal may cause the optical display system 30 to generate optical feedback which is associated with the solid target body and indicates that the tip is appropriately close to the respective solid target body such that it is arranged within an intended position or predetermined region relative to the target body within the interior of the head member. As the probe 32 is guided within the head member or brain member 25, the respective currents change in accordance with the distance to the respective solid target body, as the length of the path to the respective solid target body changes which involves a change in resistance.

The position detection circuit 38 may be realized by a comparator which has a plurality of different channels or a plurality of channels with associated comparators, where each channel is associated with one target body B1 to B5 or one current I1 to I5. Thus, for each solid target body threshold values may be chosen independently of each other and the associated current can be compared with the stored threshold value. Feedback can be generated if the threshold value is exceeded.

The position detection circuit 38 may be configured to allow different threshold values to be set for one solid target body or one current or different threshold values among which a user can choose are stored in the circuit. The system may have an interface which allows to select one of the threshold values for each solid target body. This allows to operate the system with variable accuracy, as, if a threshold value is lower, for example, the accuracy is lower and if it is higher, the accuracy may be higher.

As opposed to the previously disclosed embodiments, all of the solid target bodies may have but need not have the same diameter. Different accuracies can be realized by using different threshold values instead of bodies with different diameters. Moreover, as an electronic position detection circuit 38 is employed, it may be beneficial to provide the optical display system with a separate power source 39 as depicted. Closing an electrical circuit can no longer be used to reliably generate the feedback.

The threshold values for different channels or solid target bodies are expediently chosen such that predetermined target regions associated with different solid target bodies do not overlap. Accordingly, it can be avoided that the optical display system 30 signals that the probe 32 is arranged in two different target regions at the same time. The respective target region will be formed by a, in top view, circular region around the respective solid target body. Two arbitrary circular regions associated with different solid target bodies do not intersect or overlap as seen in top view.

It should be noted that features which are disclosed above in relation to a mechanical contact between probe and solid target body in order to verify the correct position may likewise apply for the system with the position detection circuit which monitors the position of the probe within the brain member and/or relative to the solid target bodies on the basis of the associated electrical position signals. Instead of using the mechanical contact, the electrical position signal which is indicative of the position of the probe from the solid target body may be used to identify, in conjunction with associated threshold values, whether the probe has been placed in the intended position.

As opposed to the device described by Tai et al. which was mentioned in the introductory section, which uses liquid filled target regions, the presently proposed concepts with the solid target bodies have a variety of advantages such as with respect to the electrical detectability of a mechanical contact or an intended position relative to a specific solid target body, for example. Of course additional features which are present in the device by Tai et al. could also be included in present arrangement and system. For example, the head member could be covered with a skin imitation layer on its exterior which allows to simulate the initial skin incision with a scalpel. Additionally or alternatively, a dura imitation layer may be arranged between the (first) head part and the brain member. Also the final subcutaneous tunneling of the catheter to actually drain liquid from the ventricular system is not explicitly included in the proposed concept. However, it is a routine procedure to guide a catheter into the interior once the correct target position has been reached by way of the mandrin, which may be used as probe, for example. Thus, this step is not as important. The proposed system and arrangement is however suitable to test the accuracy of arbitrary navigation systems and algorithms, which is a huge advantage.

The scope of protection is not limited to the examples given herein above. Any invention disclosed herein is embodied in each novel characteristic and each combination of characteristics, which particularly includes every combination of any features which are stated in the claims and the embodiments, even if this feature or this combination of features is not explicitly stated in the claims or in the examples.

### Reference numerals

- 10: head member
- 11: first head part
- 12: second head part
- 13: third head part
- 14: opening
- 15: closure part
- 16: fixing member
- 17: line
- B1 ... B5: target body
- 18: target carrier
- 19: fixing member
- 20: main surface
- 21: protrusion
- 22: electrical conductor
- 23: insulating layer
- 24: inner volume
- 25: brain member
- 26: conductor channel
- 27: signal conductor
- 28: inner wall
- 29: inner wall
- 30: optical display system
- L1... L5: light source
- 31: connector
- 32: probe
- 33: system carrier
- 34: guide rail
- 35: guide rail
- 36: power source
- I1...I5: current
- 37: tip
- 38: position detection circuit
- 39: power source

## Claims

1. An arrangement for simulating and/or for training of an intracranial medical procedure, in particular a surgical procedure, e.g. a neurosurgical procedure, the arrangement comprising:
- a head member (10) that is provided to act as a substitute for the cranium, the head member having a wall (28) defining an inner volume (24) of the head member,
- a target carrier (18), one solid target body or a plurality of solid target bodies (B1...B5) being positioned on the target carrier, wherein the solid target body is arranged relative to the head member such that the respective solid target body is arranged within a predetermined target region in the inner volume of the head member.

2. The arrangement of claim 1,
wherein the respective solid target body (B1...B5) is permanently secured relative to the target carrier (18) and the target carrier is releasably secured to the head member (10).

3. The arrangement of any one of the previous claims,
wherein the respective solid target body (B1...B5) is arranged to be contacted mechanically by a probe guided into the inner volume (24) from the exterior through the region of the wall (28).

4. The arrangement of any one of the previous claims,
wherein the head member (10) comprises a first head part (11) and a second head part (12), wherein the first head part is releasably secured to the second head part, wherein the target carrier (18) is secured to the second head part and the first head part defines the inner volume (24).

5. The arrangement of any one of the previous claims,
wherein two solid target bodies (B1...B5) are arranged in different predetermined target regions in the inner volume (24), wherein two solid target bodies in different predetermined target regions do have different dimensions.

6. The arrangement of any one of the previous claims,
wherein two solid target bodies (B1...B5) of different dimensions are arranged in one predetermined target region.

7. The arrangement of any one of the previous claims,
wherein the respective solid target body (B1...B5) is electrically conductive.

8. The arrangement of any one of the previous claims,
wherein the arrangement comprises a brain member (25), wherein the brain member is provided to simulate or imitate cerebral tissue, and wherein the brain member is arranged between the wall (28) and the respective solid target body (B1...B5).

9. The arrangement of claims 7 and 8,
wherein the material of the brain member (25) is electrically conductive and the respective solid target body is insulated electrically from the material of the brain member by an electrically insulating layer (23).

10. The arrangement of claim 8 or 9,
wherein the brain member (25) comprises an antifungal agent.

11. The arrangement of any one of the previous claims,
wherein the target carrier (18) has a main surface (20) and wherein at least one solid target body (B1...B5) or a plurality of solid target bodies (B1...B5) is elevated with respect to the main surface and/or wherein at least one of the solid target bodies or a plurality of the solid target bodies is arranged at least partly or only partly in a recess defined in the target carrier.

12. The arrangement of claim 11,
wherein a protrusion (21) extends from the main surface to the respective elevated solid target body (B1...B5), wherein the protrusion is hollow and an electrical conductor (22), which is conductively connected to the elevated solid target body, extends within the protrusion away from the elevated solid target body.

13. A system for simulating and/or training a medical procedure comprising:
- the arrangement of any one of the previous claims,
- a probe (32) provided to mechanically contact the respective solid target body,
- an electrical contact detection circuit (32, 27, 31) configured to generate or guide an electrical contact signal when mechanical contact is made between the probe and the respective solid target body,
- a feedback system (30) configured to generate a user perceivable feedback to indicate whether the mechanical contact has been made, where the feedback is generated in response to the electrical contact signal.

14. A system for simulating and/or training a medical procedure comprising:
- the arrangement of any one of the previous claims 1 to 12,
- a probe (32) provided to be guided into a predetermined target region,
- wherein the system is configured to detect, based on an electrical position signal, whether the probe is arranged in one of the predetermined target regions, and, preferably, in which predetermined target region the probe is arranged in, if there is a plurality of predetermined target regions,
- a feedback system (30) configured to generate a user perceivable feedback to indicate whether the probe has been guided into a particular predetermined target region, and wherein the system preferably comprises a position detection circuit, wherein the position detection circuit is configured to compare the electrical position signal which is indicative for the position of the probe relative to the respective target body with a target position threshold value of the electrical position signal where one such target position threshold value is associated with each solid target body and, when the electrical position signal exceeds the target position threshold value for the particular solid target body which is arranged in the particular predetermined target region, to generate a control signal which causes the feedback system to generate a feedback which indicates that the probe has been guided into a position within the particular predetermined target region in which the particular solid target body is arranged.

15. The system of claim 13 or 14,
wherein the system comprises a carrier (33), wherein the head member (10) is movably connected to the carrier, such that the head member can be moved laterally along the carrier in two different directions and such that the head member is rotatable and tiltable relative to the carrier.

16. A method of simulating and/or training a medical procedure comprising the following steps:
- providing a system as in claim 13 to 15,
- generating an opening (14) in the head member (10) to provide access to the inner volume (24),
- guiding the probe (32) into the inner volume and through the material of the brain member (25) into a predetermined target region,
- checking, via the feedback system (30), whether the solid target body in the predetermined target region has been contacted with the probe or whether the probe has been guided into the particular predetermined target region.

17. A method of checking the accuracy of and/or of calibrating a navigation system, comprising the following steps:
- providing a system as in claim 13 to 15,
- generating image data of the head member (10), including data indicative for the position of the respective solid target body (B1...B5) within the inner volume (24), by means of a medical imaging system,
- feeding the image data to a navigation system which is configured to guide movement of the probe to an intended position in the inner volume, wherein the intended position is chosen to be the position of one of the solid target bodies or a position within one predetermined target region which is defined by one of the solid target bodies,
- guiding the probe (32) under control of the navigation system to an end position in the inner volume which is identified as being the intended position by the navigation system,
- checking whether the end position of the probe is the intended position by detecting whether the electrical contact signal which indicates the contact of the probe and the solid target body positioned in the intended position has been generated or whether the control signal has been generated which indicates that the end position of the probe is within the predetermined target region.

18. A method of manufacturing an arrangement according to any one of the preceding claims 1 to 12 with a plurality of solid target bodies (B1...B5):
- determining a plurality of different target positions each target position being a position for one solid target body within an inner volume (24) of the head member (10) and each target position being configured to be arranged within an associated target region within the inner volume of the head member,
- manufacturing a target carrier (18) with a plurality of distinct mounting portions for solid target bodies by means of an additive production method, each mounting portion defining one mounting position for one solid target body, wherein the relative arrangement of the mounting positions with respect to one another is chosen so as to correspond to the relative arrangement of the target positions relative to one another,
- mounting one solid target body on each mounting portion in the mounting position,
- releasably securing the target carrier to one head part of the head member such that the solid target bodies are arranged in the target positions.
